# EUROPEAN PATENT APPLICATION

(11) **EP 4 764 845 A1**
(43) Date of publication of application: **24.06.2026**
(21) Application number: 25222969.5
(22) Date of filing: 12.12.2025
(51) Int. Cl.: G06F 9/38, G06F 8/41

(54) **BURST SCHEDULING**

(30) Priority: 20.12.2024 GB 202418821
(71) Applicant: Imagination Technologies Limited, Kings Langley, Hertfordshire WD4 8LZ (GB)
(72) Inventor: THOMAS, William, Kings Langley, Hertfordshire, WD4 8LZ (GB)
(74) Representative: CMS Cameron McKenna Nabarro Olswang LLP

(57) **Abstract**

A method of compiling a shader which uses burst scheduling is described. The method comprises analysing a control flow graph for a shader to create a plurality of bursts, each burst comprising an instruction from the shader. The bursts are then analysed to group them together to form one or more new, larger, bursts using pre-defined grouping rules. The resultant bursts are then ordered using pre-defined ordering rules before a modified version of the shader is output. This modified version of the shader comprises instructions in an order according to the ordered bursts where this order is different from that of the original shader.

To be accompanied, when published, by Figure 1 of the accompanying drawings.

## Description

### CROSS REFERENCE TO RELATED APPLICATION

This application claims priority from UK patent application 2418821.1 filed on 20 December 2024, which is herein incorporated by reference in its entirety.

### TECHNICAL FIELD

The invention relates to scheduling methods within a GPU (graphics processing unit) in which instructions in a program, such as a shader, are grouped together so that the program comprises a plurality of groups of instructions. The scheduling (i.e. the ordering of instructions within the program) is then performed on the groups of instructions.

### BACKGROUND

When a GPU executes a program, such as a shader, the order of the instructions in the shader impacts many aspects of the operation of the GPU such as dependencies between instructions, allocation of registers, latency and cache performance. The order of the instructions in a shader can therefore affect the efficiency of operation of the GPU when executing the shader.

The embodiments described below are provided by way of example only and are not limiting of implementations which solve any or all of the disadvantages of known methods of compiling shaders.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of compiling a shader which uses burst scheduling is described. The method comprises analysing a control flow graph for a shader to create a plurality of bursts, each burst comprising an instruction from the shader. The bursts are then analysed to group them together to form one or more new, larger, bursts using pre-defined grouping rules. The resultant bursts are then ordered using pre-defined ordering rules before a modified version of the shader is output. This modified version of the shader comprises instructions in an order according to the ordered bursts where this order is different from that of the original shader.

A first aspect provides a method of compiling a shader comprising: Receiving a control flow graph for a shader; Creating a plurality of bursts, each burst comprising an instruction from the shader; Analysing the bursts and grouping bursts together to form one or more new bursts using pre-defined grouping rules; Ordering the bursts using pre-defined ordering rules; and Outputting a modified version of the shader, the modified version of the shader comprising instructions in an order according to the ordered bursts.

Analysing the bursts and grouping bursts together to form one or more new bursts using pre-defined grouping rules may comprise: iteratively applying the pre-defined grouping rules to the plurality of bursts to group bursts together to form one or more new bursts.

Iteratively applying the pre-defined grouping rules to the plurality of bursts to group bursts together to form one or more new bursts may comprise: selecting one of the pre-defined grouping rules; Selecting a burst that comprises more than one instruction; and Recursively applying the selected rule to all sub-bursts within the selected burst to form a new burst by combining two or more sub-bursts together.

The pre-defined grouping rules may identify a plurality of burst types and an order in which new bursts of the different burst types are formed by grouping together one or more bursts.

Analysing the bursts and grouping bursts together to form one or more new bursts using pre-defined grouping rules may comprises one or more of: In response to detecting a discard instruction, forming a discard burst comprising the discard instruction; In response to detecting a chain of arithmetic instructions, forming an arithmetic burst comprising the chain of arithmetic instructions; and In response to detecting an instruction that is a producer of a predicate register, forming a predicate burst comprising the instruction that is the producer of the predicate register and any instructions that consume the predicate register.

Discard bursts may be formed before arithmetic bursts and arithmetic bursts may be formed before predicate bursts.

Analysing the bursts and grouping bursts together to form one or more new bursts using pre-defined grouping rules may further comprise: In response to detecting a sample instruction, forming a sample burst comprising the sample instruction; and Grouping one or more instructions unrelated to the sample instruction with the sample burst to form a latency hiding burst.

Analysing the bursts and grouping bursts together to form one or more new bursts using pre-defined grouping rules may further comprise: Grouping a producer instruction for the sample instruction into a sample and producer burst, wherein the latency hiding burst comprises the sample and producer burst and the one or more instructions unrelated to the sample instruction.

Latency hiding bursts may be formed after arithmetic bursts.

Analysing the bursts and grouping bursts together to form one or more new bursts using pre-defined grouping rules may further comprise: In response to detecting a pixel output instruction, forming a pixel output burst comprising the pixel output instruction.

Ordering the bursts using pre-defined ordering rules may comprise: selecting an inner most burst that comprises more than one instruction; applying the pre-defined ordering rules to bursts within the selected burst; and repeating the selecting and applying steps for a newly selected burst that comprises more than one instruction.

Ordering the bursts using pre-defined ordering rules may comprise one or more of: Prioritizing any discard bursts; Delaying bursts with stalls; and Delaying pixel output bursts.

Ordering the bursts using pre-defined ordering rules may further comprise: After any discard bursts, selecting bursts with long latency instructions.

Ordering the bursts using pre-defined ordering rules may further comprise: After any bursts with long latency instructions, selecting bursts according to a number of consumers and/or producers of the burst.

The method may further comprise: Executing the modified version of the shader.

A second aspect provides computer readable code configured to cause the methods described herein to be performed by a computer when the code is run on the computer.

A third aspect provides a computer readable storage medium having encoded thereon computer readable code configured to cause the methods described herein to be performed by a computer when the code is run on the computer.

A fourth aspect provides a computer system, comprising: a processor; and memory arranged to store computer executable instructions that, when executed by the processor, cause the computer system to perform the methods described herein.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 is a flow diagram of the method of ordering instructions within a shader;
Figure 2 shows a first example of pre-defined grouping rules that may be used in the method of Figure 1;
Figure 3 shows a first example implementation of the first phase of the method of Figure 1;
Figure 4 shows a second example of pre-defined grouping rules that may be used in the method of Figure 1;
Figure 5 shows a second example implementation of the first phase of the method of Figure 1;
Figure 6 shows a third example implementation of the first phase of the method of Figure 1;
Figure 7 shows a third example of pre-defined grouping rules that may be used in the method of Figure 1;
Figures 8A-8E show a fourth example implementation of the first phase of the method of Figure 1;
Figure 9 shows an example of pre-defined ordering rules that may be used in the method of Figure 1;
Figures 10A and 10B show two example implementations of the second phase of the method of Figure 1; and
Figure 11 shows a computer system in the methods described herein may be implemented.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, the order of the instructions in a shader can affect the efficiency of operation of the GPU when executing the shader. Depending on the order of instructions in a shader, the latency of a long-latency instruction slow the execution of the shader, or some of the latency can be hidden by performing other, unrelated, instructions whilst waiting for the long-latency instruction to complete. Similarly, depending on the order of instructions, the number of registers required to execute the shader can vary as a consequence of the time period over which any particular register is required to store the same value. Cache performance can be impacted if the order of instructions is such that data is stored in the cache and then evicted to make space to store other data before the last time the data is used within the shader. The order of the instructions is generally defined at the time the shader is written although a compiler may apply some rules to move some instructions within the shader in specific situations.

Described herein is a method of ordering instructions within a shader that is performed by a compiler at compile-time. The process of ordering of instructions within a shader is referred to herein as 'scheduling' and is distinct from other scheduling operations, such as selecting instructions for execution at run time (e.g. by a hardware scheduler). The method has two phases - a first phase in which the instructions within a shader are grouped together into groups which may be referred to as 'bursts', and then a second phase in which the bursts are selected in turn and the instructions and any bursts within the selected burst are ordered. The output is a compiled shader in which the instructions have been ordered according to the ordered bursts. As described below, a burst may contain other bursts (i.e. bursts may be nested and the bursts within the selected burst may be referred to as sub-bursts). Depending upon the level of the nesting that is being considered at any point in the method described herein, every burst except the burst comprising all the instructions a control flow block of the shader (referred to as the main burst) may be considered both a burst and a sub-burst and as such the terms may be used interchangeably.

By using this two-phase approach at compile-time, the complexity of ordering the instructions is significantly reduced. The grouping that is performed in the first phase collects together instructions that need to be executed together (e.g. executed sequentially or close together) and reduces the number of dependencies that need to be taken into consideration when performing the ordering in the second phase. The resultant compiled shader which is generated and output by the method improves the efficiency of the GPU when executing the shader (compared to executing the shader with the instructions in the original order). In addition to generating a compiled shader that is more efficient when run, by using the two-phase approach described herein, the time taken to perform the ordering is reduced (compared to performing ordering on a per-instruction basis). Dependent upon the particular shader, the ordering in the second phase may result in a re-ordering of instructions or there may be no re-ordering (e.g. where the original instructions are found to already be in the optimum order as defined by the method described herein).

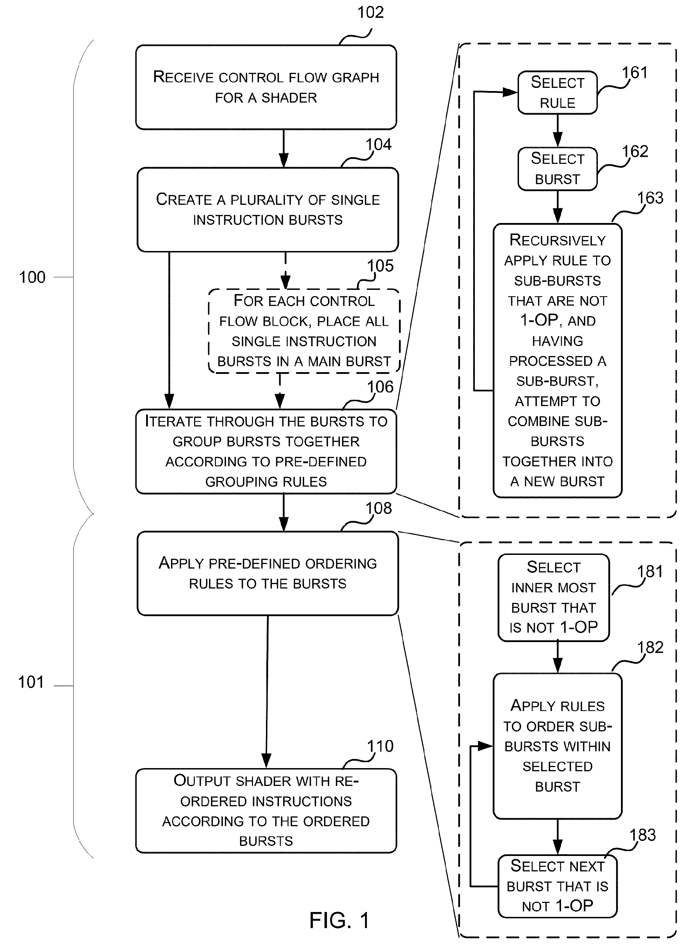

Figure 1 is a flow diagram of the method of ordering instructions within a shader. The method comprises receiving a control flow graph (CFG) for a shader (block 102) and creating, from the CFG, a plurality of bursts, each comprising a single instruction (block 104). These single instruction bursts (created in block 102) may be referred to as 1-OP bursts. All the 1-OP bursts within each control flow block in the CFG for the shader may be placed within a main burst which comprises all the instructions in the control flow block (block 105). The CFG for a shader may, for example, be split into control flow blocks by branches in the shader. The method then iterates through the bursts according to pre-defined burst grouping rules in order to group 1-OP bursts together (block 106). When iterating through the bursts (in block 106), the pre-defined burst grouping rules may be applied from the outside inwards (e.g. starting from the main burst), with the rules being re-applied within newly formed bursts, in order to identify bursts within bursts. The precise order in which the grouping is performed (e.g. whether it is strictly from the outside in or varies from this) will depend according to the implementation and the same resulting groupings of 1-OP bursts may be achieved by applying the same pre-defined burst grouping rules but in different orders. Each burst that is generated in the first phase 100 of the method (blocks 102-106) is a group of one or more instructions. All bursts except for the 1-OP bursts (which may be considered a special case) comprise a plurality of instructions that are executed atomically and instructions within a burst are executed sequentially. The phrase 'executed atomically' is used herein to mean that the group of instructions do not have any external dependencies which need resolving during execution of the instructions in the group (i.e. there are no circular dependencies).

Figure 1 also shows an example method of performing the grouping of bursts (in block 106) which can also be represented by the following pseudocode:
func ApplyRule(burst, rule):
   for each sub-burst in burst:
   if sub-burst is not one op:
      ApplyRule(sub-burst, rule)
   try to build burst based on sub-burst
for each rule:
   while changing:
   ApplyRule(main burst, rule)
In this method, a 'sub-burst' refers to any nested burst (i.e. any burst that is within another, larger burst). As shown in Figure 1 and in the pseudocode above, for each rule in turn (as selected in block 161), the method iterates through each sub-burst within a burst (as selected in block 162) and recursively applies the selected rule to any sub-bursts which contain more than one instruction (in block 163). This may involve identifying new sub-bursts nested within the sub-burst. After processing a sub-burst, the method also attempts to combine sub-bursts together (in block 163). It will be appreciated that this is only one possible implementation and the precise order in which the grouping is performed may vary between implementations, e.g. the method may consider all sub-bursts at a particular level in the hierarchy before considering any more-nested sub-bursts.

Having grouped the instructions into bursts in the first phase 100, the method applies pre-defined ordering rules to the bursts generated in, and hence output from, the first phase 100 (block 108). These ordering rules are applied from the inside out, i.e. starting with the most deeply nested burst that is not a 1-OP burst and working outwards to the main burst. Figure 1 also shows an example method of performing the ordering. As shown, the method may comprise selecting an inner most burst which is not a 1-OP burst from the nested bursts formed in the first phase 100 (block 181) and using the pre-defined ordering rules to order the sub-bursts within the selected burst (block 182). As the selected burst is not a 1-OP burst it will always comprise at least one sub-burst. A next burst which is not a 1-OP burst is then selected (block 183) and the method repeated until all bursts that are not a 1-OP bursts have been processed (i.e. considered as part of block 108). The 1-OP bursts are not selected (in block 181 or 183); however, they will have been ordered when considering the smallest non-1-OP burst of which they are part. The method outputs a shader (which has a flat, non-hierarchical structure) in which the instructions are ordered according to the ordered bursts (block 110). This is the second phase 101 of the method (blocks 108-110). Whilst not shown in Figure 1, the shader that is output (in block 110) is subsequently executed by a GPU when rendering graphics. This GPU is in a computing device that is separate from the computing device that executes the method of Figure 1.

As a consequence of the ordering (in block 108), the instructions in the compiled shader (as output in block 110) may be a different order to those in the original, uncompiled, shader. In contrast to the grouping (in block 106), the ordering of bursts (in block 108) is performed from the inside out (e.g. starting with the most deeply nested bursts). As shown in Figure 1, instructions are grouped in the first phase 100 and then these groups are used to simplify the ordering operation (which, as described above, may also be referred to as a scheduling operation) in the second phase 101 of the method. The input to the method is a control flow graph which has a set of possible orders. As the bursts are built in the first phase 100, this set of possible orders is constrained to a smaller set of orders and it is this smaller set of orders which are exploited in the second phase 101. As the set of possible orders has been constrained, the ordering process is simplified. As will be demonstrated by some of the examples below, when performing the grouping in the first phase 100, there may be some consequential re-ordering of bursts (e.g. 1-OP bursts or bursts comprising a plurality of instructions) within another burst, prior to the burst ordering of the second phase 101. Any re-ordering that occurs in the first phase 100 is a consequence of the constraining of possible orders that results from burst generation in the first phase 100.

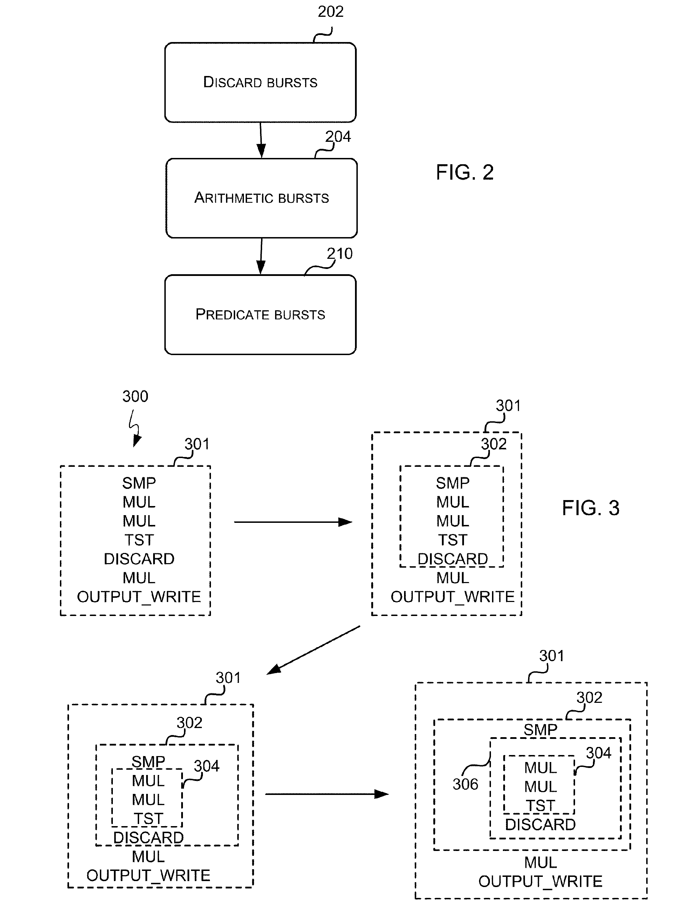

Figure 2 shows a first example of pre-defined grouping rules that may be used in the method of Figure 1 (in block 106). The pre-defined grouping rules define a plurality of burst types and an order in which bursts of the different burst types are formed from smaller, e.g. 1-OP, bursts (in block 106). In the example shown in Figure 2, the pre-defined grouping rules initially identifies discard bursts (block 202), then arithmetic bursts (block 204) and then predicate bursts (block 210). A discard burst is a minimal set of instructions that must be executed to execute a discard or kill instruction. An arithmetic burst is a chain of arithmetic instructions that benefit from being executed atomically (e.g. in terms caching or internal register usage or execution on dedicated hardware where the processor includes dedicated hardware for processing bursts). A predicate burst is a group of instructions that comprises an instruction that is the producer of a predicate register and any instructions that consume the predicate register.

These rules can be demonstrated with reference to the shader 300 shown in Figure 3. It will be appreciated that a very short, simple shader is shown for purposes of explanation only and in practice a shader may comprise many more instructions than shown in Figure 3. Initially, there are 7 bursts, each comprising a single instruction (from block 104). These may all be within a main burst 301 (from block 105). Applying the pre-defined grouping rules from Figure 2 (in block 106), initially a discard burst 302 is identified (block 202). The rules are then applied to discard burst 302 and an arithmetic burst 304 is identified within the discard burst 302 (block 204). Additionally, whilst applying the rules to the discard burst 302, a predicate burst 306 is identified (block 210). For this very simple shader shown in Figure 3, the set of possible orders in the control flow graph is constrained to a single order and so no further re-ordering may occur in the second phase 101 of the method.

By prioritising discard bursts (block 202) in the pre-defined grouping rules and also in the pre-defined ordering rules (as described below), the method enables the overall method (including the second phase 101) to minimise the number of instructions that are executed before each kill instruction. Identification of arithmetic bursts may improve cache or register efficiency, or where the processor comprises dedicated hardware for executing arithmetic bursts, enables use of such dedicated hardware. Identification of predicate bursts, which include Boolean tests, (block 210) in the pre-defined grouping rules means that the predicate register is immediately consumed (within execution of the burst) and before any further predicate registers are produced. If there are two live predicate registers in the shader but only a single predicate register in the hardware this causes spilling of one of the predicate registers to a temp register and this requires the addition of two new instructions to the shader.

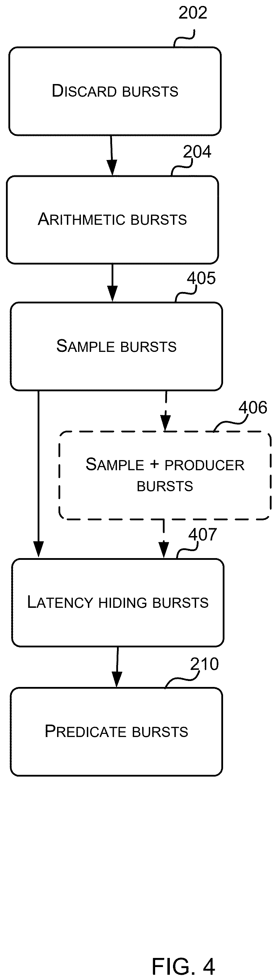

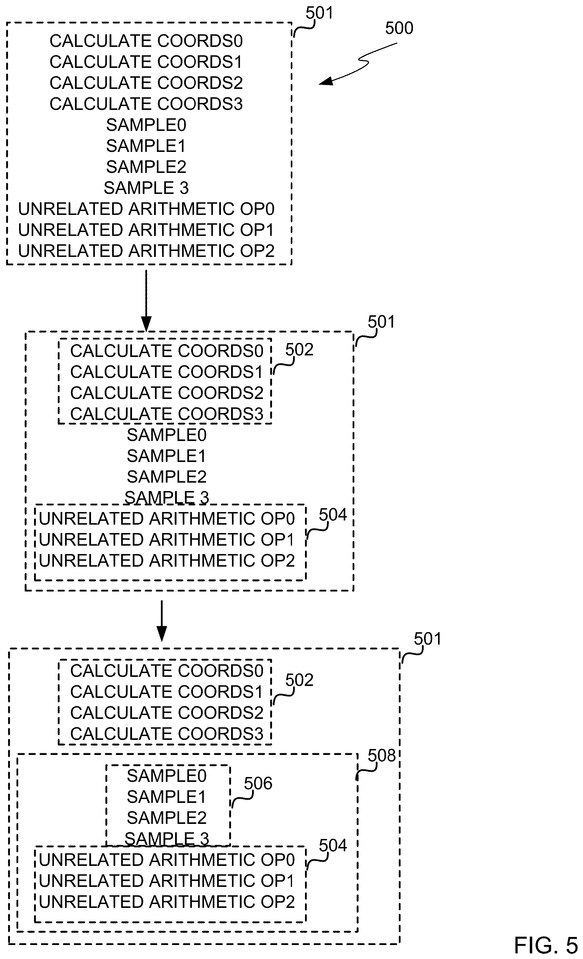

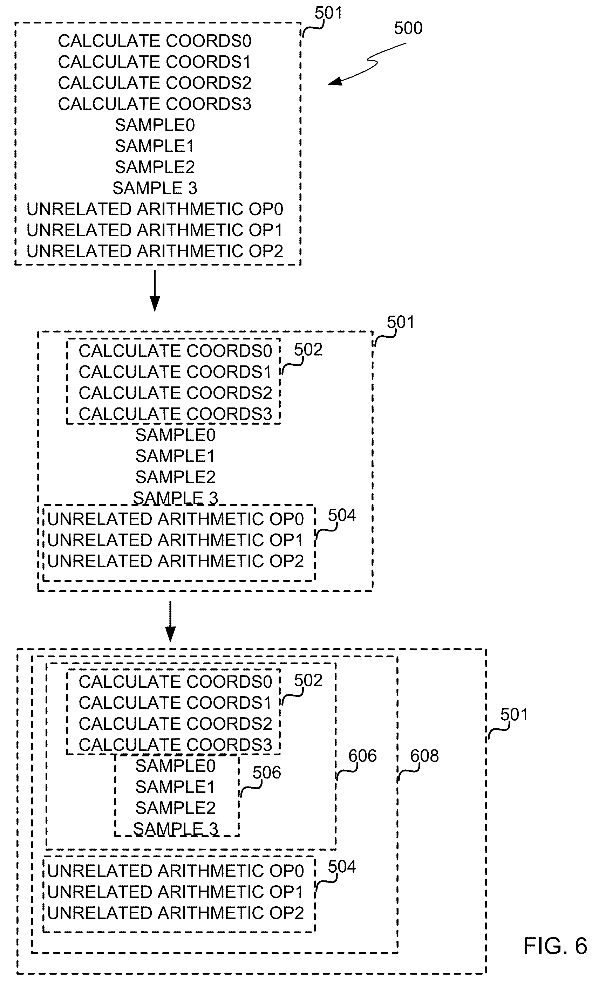

Figure 4 shows a second example of pre-defined grouping rules that may be used in the method of Figure 1 (in block 106) and these rules can be demonstrated with reference to the portion of a shader 500 shown in Figures 5 and 6. Compared to the rules shown in Figure 2, the rules in Figure 4 comprise three additional rules relating to sample bursts (block 405), corresponding sample and producer bursts (block 406) and latency hiding bursts (block 407). A sample burst is a group of instructions which sample a texture from memory.

Using the first new rule (block 405), bursts are formed of sample instructions which helps with latency and cache efficiency. As sample instructions can have longer latency than other types of instructions, by grouping them together, they can then be assembled into a latency hiding burst (in block 407) along with some unrelated arithmetic instructions (which may be grouped as an arithmetic burst) which are positioned after the sample burst within the latency hiding burst. This enables the unrelated arithmetic instructions to be performed whilst the sample instructions are waiting for data to return, thereby avoiding the GPU pipeline being stalled for this period and improving the overall efficiency of the GPU when the shader is executed. A latency hiding burst therefore comprises a sample burst and one or more other unrelated instructions.

In some examples, before forming a latency hiding burst (in block 407), a sample and producer burst may be formed (in block 406) which comprises the sample burst (from block 405) and the instructions that are used to calculate the coordinates for sampling (i.e. the producer instructions for the instructions in the sample burst). These producer instructions may already have been grouped as an arithmetic burst. In such examples, the latency hiding burst comprises the sample and producer burst (from block 406) and some unrelated arithmetic instructions (which, as described above, may be grouped as an arithmetic burst).

The rules shown in Figure 4 can be demonstrated with reference to the portion of a shader 500 shown in Figure 5. Initially, there are 11 1-OP bursts in the portion shown, each comprising a single instruction (from block 104). These may be grouped within a main burst 501 (in block 105). As the instructions shown in Figure 5 are only a portion of the shader, and a main burst corresponds to a control flow block, there may be more than one main burst in the entire shader and/or there may be additional instructions within the main burst 501 which are not shown in Figure 5.

Applying the pre-defined grouping rules from Figure 4 (in block 106), there are no discard bursts identified (in block 202) within the main burst 501, but two arithmetic bursts 502, 504 are identified (block 204). A sample burst 506 is then identified (block 405) and is grouped with some unrelated arithmetic instructions (arithmetic burst 504) to form a latency hiding burst 508 (block 407). Finally, there are no predicate bursts identified (in block 210).

Where a shader comprises arithmetic instructions that are used to calculate the coordinates for sampling, these have to be performed before the sample instructions. By positioning them within the shader close to (e.g. immediately prior to) the sample burst, it minimises the length of time that the calculated coordinates needs to be stored in registers / memory. This positioning may either be implemented as part of the ordering (in block 108 of the second phase 101 of the overall method), as would be the case for the example shown in Figure 5, or alternatively, as shown in Figure 6, this grouping may be performed after forming the sample burst 606 (in block 406). In Figure 6, the producer instructions have already been grouped as an arithmetic burst 502 and so the sample and producer burst 606 comprises the sample burst 506 and the arithmetic burst 502 comprising the producer instructions. The latency hiding burst 608 therefore comprises the sample and producer burst 606 and the arithmetic burst 504 that comprises unrelated arithmetic instructions. Whilst in Figure 6, it appears that the main burst 501 is the same as the latency hiding burst 608 (because of creating a sample and producer burst 606), there may be additional instructions that are in the main burst 501 but not in the latency hiding burst 608 because, as described above, Figures 5 and 6 only show a portion of a shader 500.

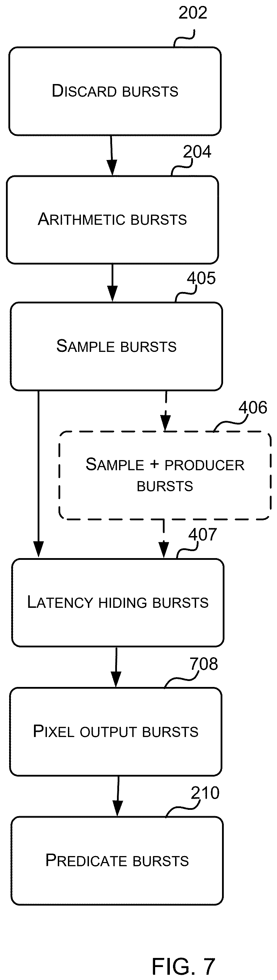

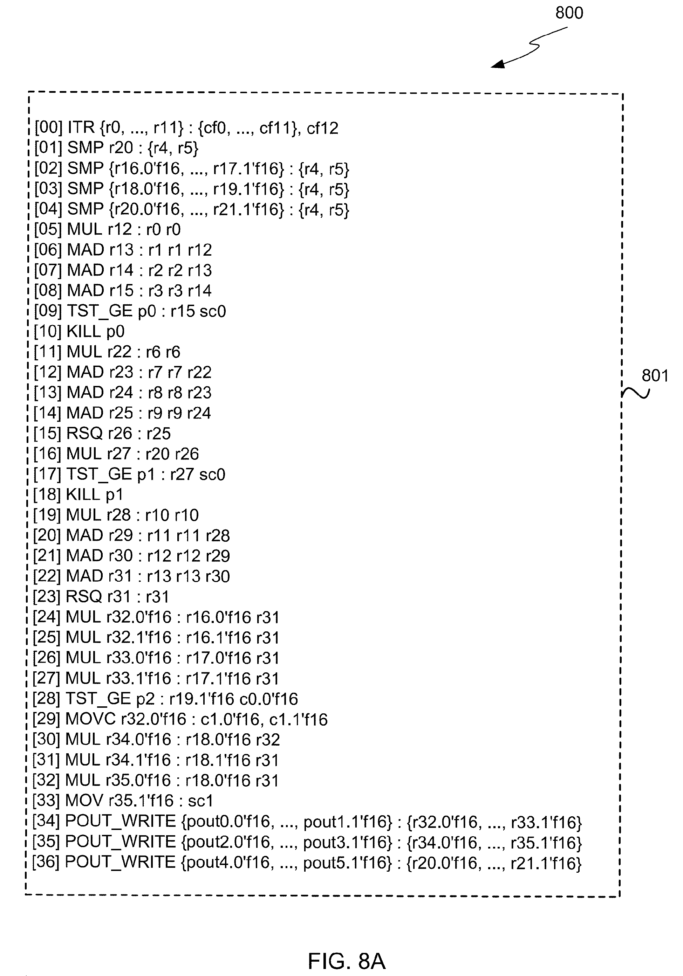

Figure 7 shows a third example of pre-defined grouping rules that may be used in the method of Figure 1 (in block 106) and these rules can be demonstrated with reference to the shader 800 shown in Figures 8A-E. In this example ITR = iterate (which performs the interpolation of pixel shader inputs across triangles), SMP = sample, MUL = multiply, MAD = fused multiply-add, TST_GE = test greater than or equal, RSQ = reciprocal square root, MOV = move, MOVC = conditional move (c = cond ? a : b) and POUT = pixel output. Compared to the rules shown in Figure 4, the rules in Figure 7 comprise an additional rule relating to pixel output bursts (block 708). Using the new rule, bursts are formed of pixel output instructions and these are referred to as pixel output bursts. This enables these instructions to be delayed within the shader (in the ordering phase 101) and this improves GPU efficiency as it delays the check on whether the output registers (where the pixel output instructions write to) are available and other instructions can be executed during periods when the output registers may not yet be available.

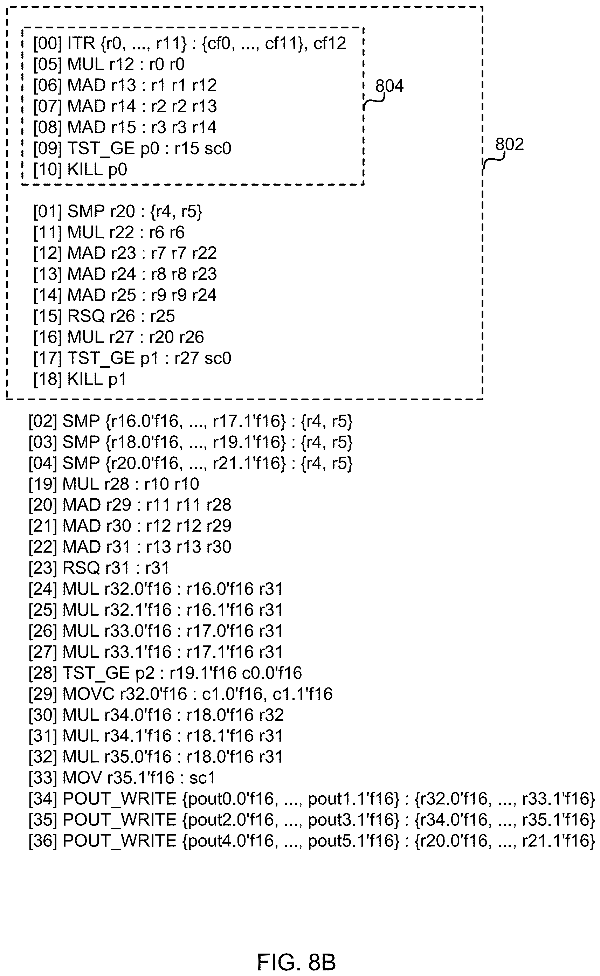

The rules shown in Figure 7 can be demonstrated with reference to the shader 800 shown in Figure 8A. Initially, there are 37 bursts in the portion shown, each comprising a single instruction (from block 104). These 1-OP bursts may be placed within a main burst 801 (in block 105) if all are part of the same control flow block. For the purposes of clarity, the main burst 801 is not shown in Figures 8B-E.

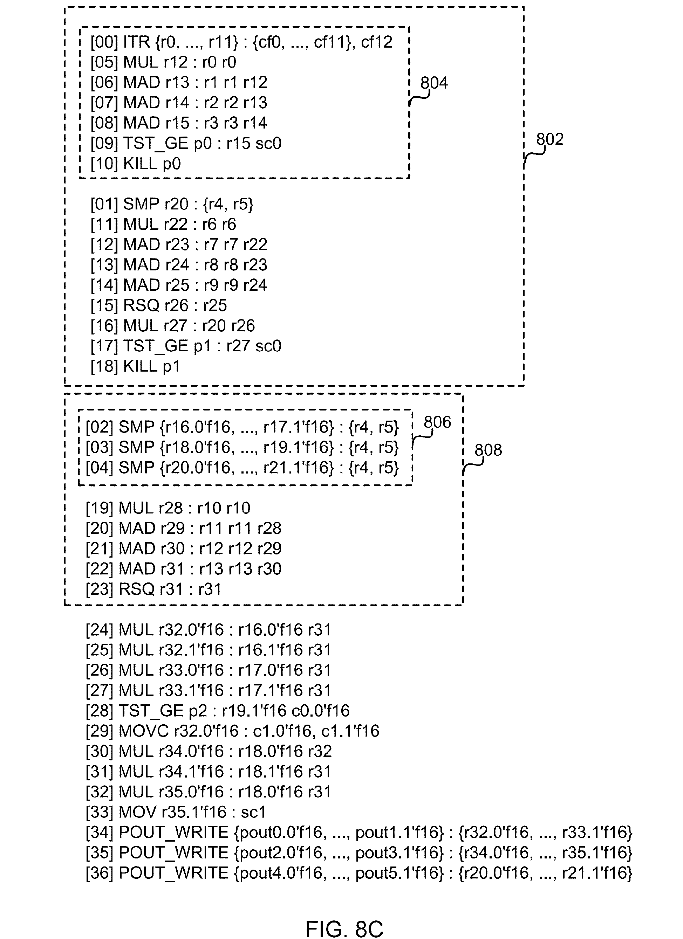

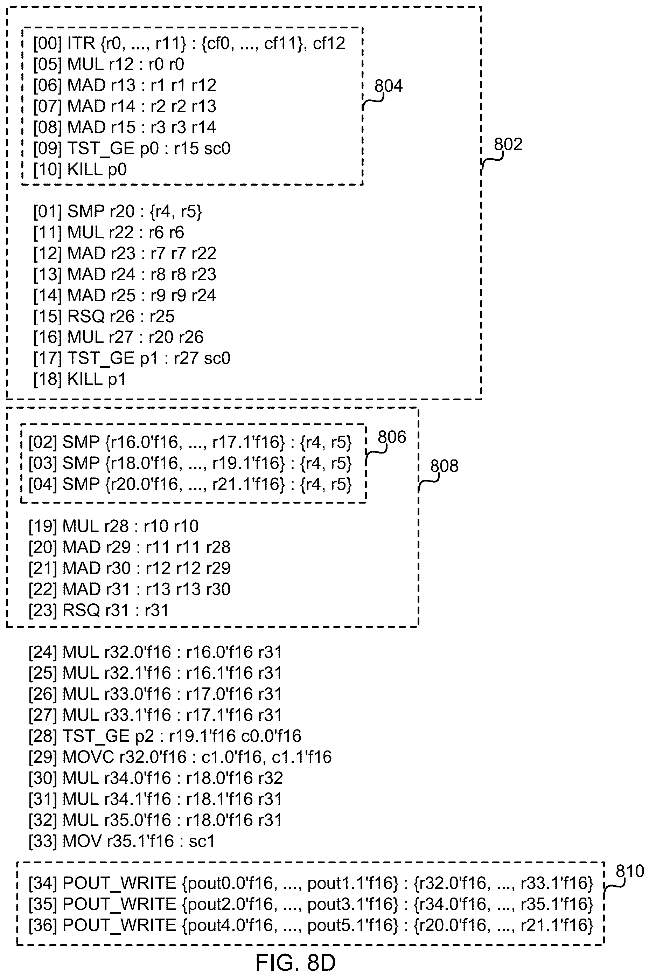

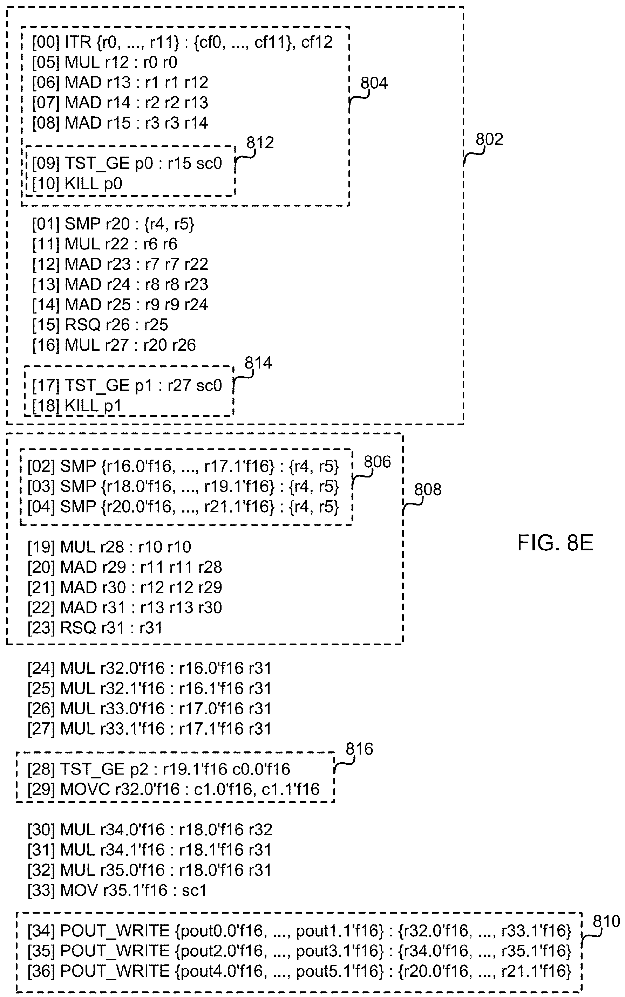

Applying the pre-defined grouping rules from Figure 7 (in block 106) working from the outside (i.e. from the level of the main burst 801) inwards, first identifies a discard burst 802 (block 202), as shown in Figure 8B. The pre-defined grouping rules from Figure 7 are then applied to the newly formed discard burst 802 and a second, nested discard burst 804 is identified (block 202), as also shown in Figure 8B. No arithmetic bursts are identified (in block 204), but a sample burst 806 is then identified (block 405) and is grouped with some unrelated arithmetic instructions to form a latency hiding burst 808 (block 407), as shown in Figure 8C. Although not shown in Figure 8C, these unrelated arithmetic instructions could have been grouped into an arithmetic burst. Moving through the pre-defined grouping rules shown in Figure 7, a pixel output burst 810 is identified (block 708), as shown in Figure 8D. Then, finally, as shown in Figure 8E, three predicate bursts 812, 814, 816 are identified (block 210).

Whilst the examples of the pre-defined grouping rules shown in Figures 2, 4 and 7 and described above include between 3 and 7 different rules and burst types, it will be appreciated that in other examples, there may be different rules and/or burst types in addition to, or instead of, those shown in Figures 2, 4 and 7 and/or one or more of the rules and/or burst types shown in Figures 2, 4 and 7 may be omitted. The list below includes a number of additional burst types compared to those shown in Figures 2, 4 and 7 and the pre-defined grouping rules may comprise any one or more of the burst types listed below (in addition to, or instead of one or more of the burst types shown in Figures 2, 4 and 7) and it will be appreciated that this is not an exhaustive list. Additionally, in the list below, some of the burst types shown in Figures 2, 4 and 7 have been subdivided into more than one burst type.
- Discard (or kill) bursts (202)
- Arithmetic bursts (204)
- Arithmetic burst merge (e.g. merged unrelated arithmetic bursts, as it may be more efficient to have fewer bursts overall even if the combination of bursts are unrelated and hence do not provide caching-related benefits)
- Sample bursts
   ∘ Sample bursts comprising instructions that relate to the same coordinate
   ∘ Sample bursts comprising instructions that sample the same image
- Load/Store bursts comprising instructions that load/store to memory
- Sample with unique producers (where a unique producer is an instruction that is only consumed by the sample instruction (and the consumers of the sample)
- Primary pipeline grab unique producers/consumers comprising chains of 1-OP bursts in the primary pipeline which are only produced/consumed by operations in the burst
- Vertex buffer writes (these differ from the pixel output bursts that are formed from pixel output instructions, block 708), because rather than delaying these writes, as is the case for the pixel output bursts, these may instead be prioritized in the pre-defined ordering rules so that the vertex buffer writes are written as soon as possible).
- Latency management
   ∘ Latency hiding (407)
   ∘ Latency grouping, which gathers independent instructions with latencies so that their latencies run concurrently (hence it seeks to achieve the same objective as latency hiding, but in a different manner).
- Predicate bursts (210)

Furthermore, the ordering of the rules may differ compared to those shown in Figures 2, 4 and 7 whilst still aiming to achieve the same objective of improving the efficiency of the shader when executed. The ordering of rules may be changed dependent upon the hardware that ultimately executes the shader that is output by the method described herein, e.g. to optimize the efficiency of that hardware. The optimum ordering for a particular hardware implementation may, for example, be determined using experiments or simulations.

As described above, having grouped the instructions into bursts in the first phase 100, the method applies pre-defined ordering rules to the bursts output from the first phase 100 (block 108), e.g. as shown in Figure 8E, as part of the second phase 101 of the method. Referring back to the bursts shown Figure 8E, the pre-defined ordering rules may process the bursts (e.g. select the bursts in blocks 181 and 183 of Figure 1) to update their internal ordering (i.e. the ordering of sub-bursts within the burst) in the following order: predicate burst 812 (this is the inner-most burst which is not a 1-OP burst so is selected in block 181), discard burst 804, predicate burst 814, discard burst 802, sample burst 806, latency hiding burst 808, predicate burst 816, pixel output burst 810 and then the main burst.

When applying pre-defined ordering rules to a selected burst, sub-bursts within the particular burst being considered (i.e. selected burst from block 181 or 183) may only be considered that are able to be scheduled at that point in the scheduling process (e.g. because any variables that are inputs to the burst are read or calculated by instructions outside the burst or have been read or calculated in previously scheduled sub-bursts within the same selected burst). The sub-bursts which are able to be scheduled may be referred to as a pool of candidate sub-bursts for scheduling. As the scheduling for a selected burst proceeds, different sub-bursts may become able to be scheduled and hence become part of the pool of candidate sub-bursts for scheduling. The method may apply a heuristic based scoring system for those sub-bursts which are in the pool of candidate sub-bursts. As this method is implemented within a compiler, when a sub-burst is scheduled it is just placed next within the selected burst in the ordered shader and is not actually executed.

The method applies the first rule to each of the candidate sub-bursts in the pool and allocates a score to each sub-burst dependent upon whether the particular sub-burst satisfies the rule. For example, if a sub-burst satisfies a rule, it is allocated a score (e.g. a score of one) and if not, it is not allocated a score (i.e. it scores a zero). If, after applying the first rule, there is one candidate sub-burst in the pool which has the best score (which may be a highest score in the example above, but depending upon the scoring scheme used could alternatively be a lowest score), then that sub-burst is positioned within the selected burst in the shader so that it is executed next (e.g. first if this is the first ordering operation for the selected burst) and the method is repeated. If there is a tie between sub-bursts (such that there no single candidate sub-burst in the pool has a best score), the next rule may be applied in a similar manner to the first rule. The scoring scheme used for different rules may be the same or may be different (e.g. for the rule regarding bursts with stalls, 914, the score allocated to a sub-burst may be the number of stall cycles such that the best score is the lowest and for a rule regarding the number of consumers, 908, the score allocated to a sub-burst may be the number of consumers such that the best score is the highest). If after applying the next rule, there is one candidate burst in the pool which has a best score, then that sub-burst is positioned within selected burst in the shader so that it is executed next within the selected burst (e.g. first if this is the first ordering operation) and the method is repeated. If even after applying all of the rules, there is still more than one candidate sub-burst with the best score, one of these candidate sub-bursts with the best score is selected (e.g. the first one in a list of candidate sub-bursts or selected at random from those with the best score).

Whenever the method is repeated for a particular selected burst, the pool of candidate sub-bursts for scheduling will change because a sub-burst has been selected and scheduled in the previous iteration and hence is no longer in the pool of candidate sub-bursts for scheduling and also, as a consequence of scheduling the sub-burst selected in the previous iteration, other sub-bursts may now have their pre-requisites met.

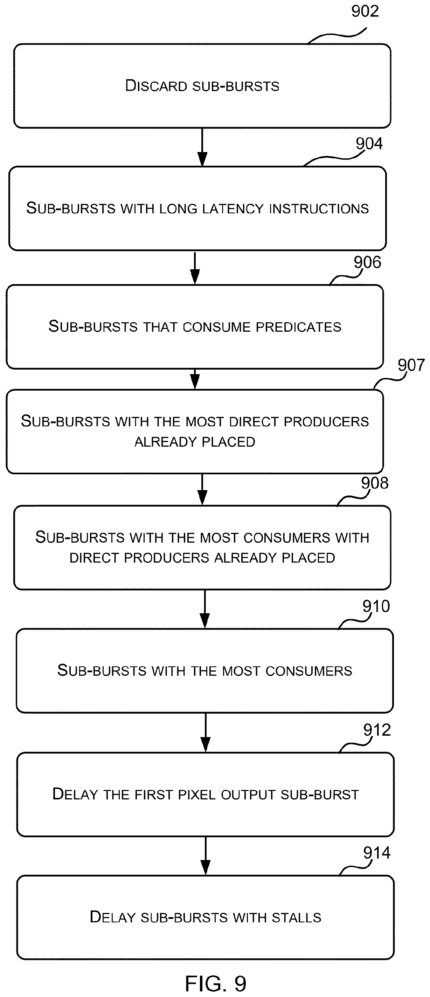

Figure 9 shows an example of pre-defined ordering rules that may be used in the method of Figure 1 (in block 108). Whilst this example shows eight rules, in variations of that shown in Figure 9, one or more of the rules may be omitted and/or there may be additional rules included which are not shown in Figure 9. Furthermore, in variations of the example shown in Figure 9, the rules may be ordered differently and this may be dependent upon the particular hardware arrangement on which the output shader is executed.

In the example shown in Figure 9, the pre-defined ordering rules prioritize discard sub-bursts (block 902) in order to minimise the number of instructions that are executed before each discard instruction and at the other end of the list, the first pixel output write instructions (e.g. pixel output writes to registers) are delayed as far as possible (block 912) and sub-bursts with stalls are also deprioritized (block 914). In between these two extremes, sub-bursts with long latency instructions are prioritized (block 904) in order to reduce the overall latency of the shader and, where possible, to hide the latency. Beyond the long latency instructions (in block 904), the scheduling of sub-bursts is dependent upon whether predicates are consumed (block 906) and the number of producers / consumers of the sub-burst (blocks 907, 908 and 910). A producer/consumer relationship is a relationship between two sub-bursts (or nodes) where one is a producer of another. In a direct producer/consumer relationship, sub-burst A (the producer) includes an instruction which produces a register which is consumed by an instruction in sub-burst B (the consumer). In an indirect producer/consumer relationship there is a chain of direct consumer relationships between A and B, e.g. an instruction in sub-burst A (the producer) produces a register which is consumed by instruction in sub-burst C (the direct consumer), the instruction in sub-burst C uses that register to produce a further register which is consumed by an instruction in sub-burst B (a direct consumer for the instruction in sub-burst C and an indirect consumer for the instruction in sub-burst A). Referring back to the example shader shown in Figure 8A, instruction [10] (KILL p0) is a direct consumer of instruction [09] (TST_GE p0: r15 sc0) and an indirect consumer of instructions [00] and [05]-[08] (i.e. those instructions that contribute to producing r15 which is in instruction [09]). The first rule (block 907) counts the number of direct producers of the sub-burst that have been scheduled in previous sub-bursts. The count may be of sub-bursts that are direct producers and have been previously scheduled or of individual direct producer instructions within the sub-bursts that have been previously scheduled. Of the two rules that relate to the number of consumers (again counting either sub-bursts or individual instructions), the first (block 908) counts consumers of the sub-burst who have already had their direct producers scheduled in previous sub-bursts (this scheduling of direct producers may also be referred to as mapping of direct producers), whereas the second rule (block 910) counts all consumers of the sub-burst irrespective of whether their direct producers have already been scheduled. These producer and consumer based rules (blocks 907, 908, 910) prioritize the consumption of existing data (e.g. data generated by instructions in previously scheduled sub-bursts) over generation of new data and as a consequence aim to reduce register pressure by reading data (which may also be described as consuming the data) soon after they have been written (by an instruction which is a producer).

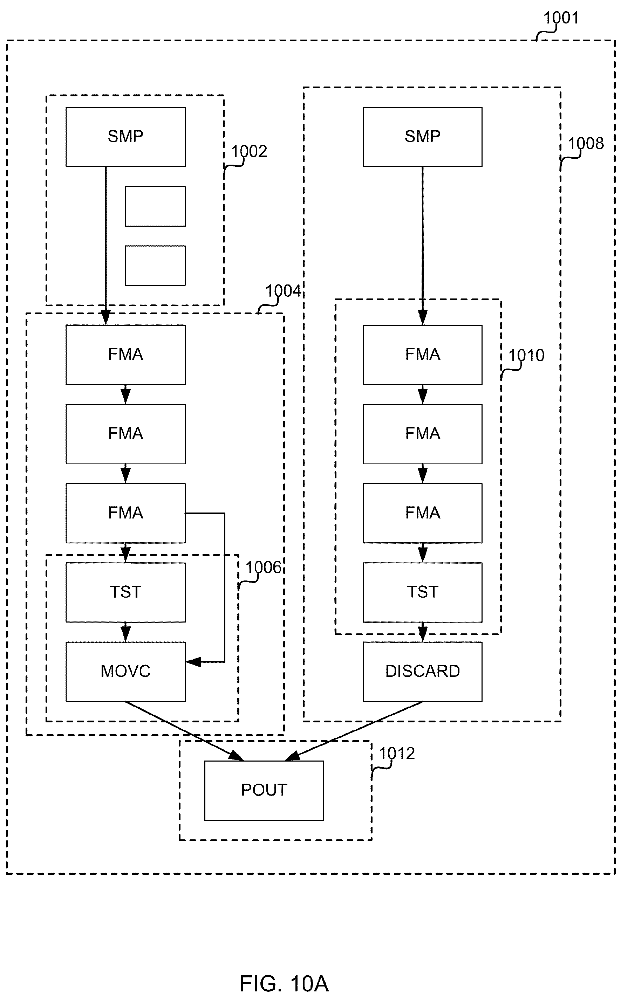

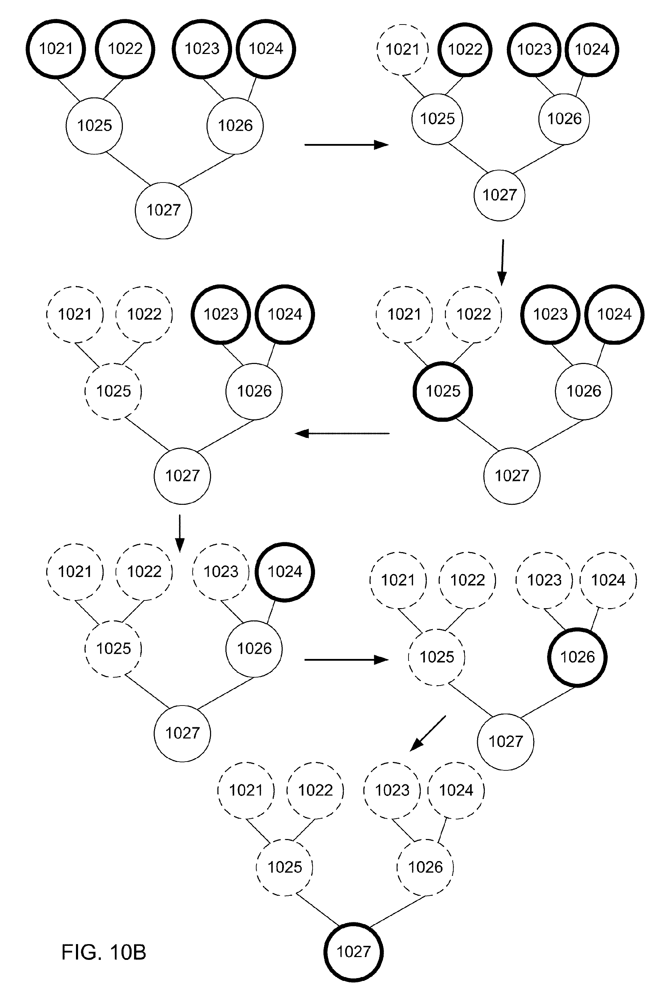

The pre-defined ordering rules shown in Figure 9 can be described with reference to the examples shown in Figures 10A and 10B. As described above, ordering is performed from the inside out which means that ordering is performed depth first, starting with a most-deeply nested burst (as selected block 181) and all sub-bursts within a burst are ordered (in block 182) before the burst itself is ordered (i.e. before it can be selected in block 183). The same pre-defined ordering rules are used for ordering sub-bursts within all bursts that are larger than 1-OP bursts. 1-OP bursts do not need to be internally ordered as there is only a single instruction. Figure 10A is a graphic representation of a shader where the instructions have been grouped into bursts 1002-1012 in the first phase of the method 101 and so the ordering (in the second phase 101) is straightforward whereas the example shown in Figure 10B is more complex and more re-ordering occurs in the second phase 101.

Initially in the example shown in Figure 10A, the initial ordering operations will select and order each of the nested bursts 1006, 1010 and then the next level of bursts 1002, 1004, 1008. Having internally ordered each of these bursts, the next burst that is selected will be the main burst 1001. At this stage, the pool of candidate sub-bursts comprises two bursts 1002, 1008. Sub-bursts 1004 and 1012 are not included in the pool of candidate sub-bursts as their pre-requisites within the selected burst have not been satisfied. Applying the first rule (block 902) to the main burst 1001, sub-burst 1002 is not a discard burst whereas sub-burst 1008 is a discard burst and so is selected first. The method then proceeds to select sub-burst 1002 (the only candidate sub-burst at this point), then sub-burst 1004 and finally sub-burst 1012. Without using the pre-defined ordering rules as described herein, sub-burst 1002 may be selected in preference to sub-burst 1008 and positioned earlier within the shader.

Figure 10B is a graphic representation of another shader where the instructions have been grouped into bursts 1021-1027 which all form part of a main burst (not shown in Figure 10B) which has been selected for scheduling. Each sub-burst within the main burst is represented by a circle and the edges between circles represents a direct producer-consumer relationship between sub-bursts, with a first sub-burst that is shown lower in the diagram than a second sub-burst to which it is connected by an edge being the consumer and the second sub-burst that is shown higher in the diagram than the first sub-burst to which it is connected by an edge being the producer. Initially the pool of candidate sub-bursts comprises four sub-bursts 1021-1024 (as indicated by the bold circles). Applying the pre-defined ordering rules to these four sub-bursts 1021-1024, sub-burst 1021 has (in this example) the highest score (e.g. because it is a discard burst) and so is scheduled first (as indicated by the dotted outline in the second representation). The pool of candidate bursts now comprises three sub-bursts 1022-1024. Applying the pre-defined ordering rules to these three sub-bursts 1022-1024, sub-burst 1022 has one consumer (burst 1025) with a direct producer already placed (burst 1021) and hence has the highest score according to the rule relating to sub-bursts with the most consumers with direct producers already placed (block 908) and so is scheduled first (as indicated by the dotted outline in the third representation). The pool of candidate sub-bursts now comprises three sub-bursts 1023-1025. Applying the pre-defined ordering rules to these three sub-bursts 1023-1025, sub-burst 1025 has two direct producers already placed (sub-bursts 1021 and 1022) whereas sub-bursts 1023 and 1024 do not have any and hence sub-burst 1025 has the highest score according to the rule relating to sub-bursts with the most direct producers already placed (block 907) and so is scheduled first (as indicated by the dotted outline in the fourth representation). This is then repeated, as shown by the various representations in Figure 10B with the bursts ultimately being scheduled in the following order: 1021, 1022, 1025, 1023, 1024, 1026, 1027.

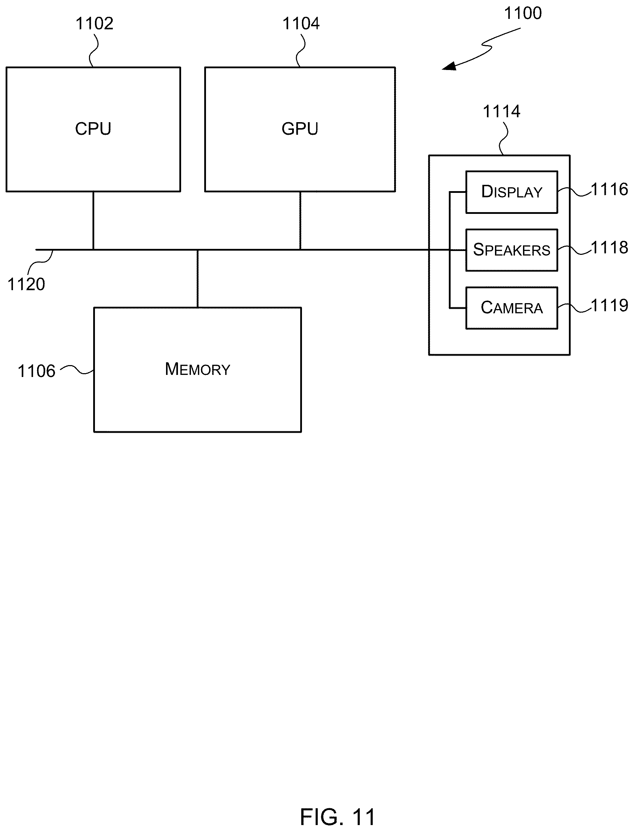

By splitting the compiling method into two stages - the first which groups instructions according to a first set of rules and the second which orders the resultant groups according to a second set of rules - the resulting shader has a more optimised instruction ordering which results in the hardware that executes the shader (e.g. a GPU as shown in Figure 11) operating more efficiently.

Figure 11 shows a computer system 1100 in which the methods described herein may be implemented or in which the resultant shader may be executed. The computer system comprises a CPU 1102, a GPU 1104, a memory 1106, a neural network accelerator (NNA) 1108 and other devices 1114, such as a display 1116, speakers 1118 and a camera 1119. For example, a compiler that executes the methods described herein may be stored within the memory 1106 and executed by the CPU 1102. Alternatively, the shader generated by the methods described herein may be stored within the memory 1106 and executed by the GPU 1104. In other examples, one or more of the depicted components may be omitted from the system. The components of the computer system can communicate with each other via a communications bus 1120.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of compiling a shader comprising:
Receiving a control flow graph for a shader (102);
Creating, from the control flow graph, a plurality of bursts, each burst comprising an instruction from the shader (104);
Analysing the bursts and grouping bursts together to form one or more new bursts using pre-defined grouping rules (106);
Ordering the bursts using pre-defined ordering rules (108); and
Outputting a modified version of the shader, the modified version of the shader comprising instructions in an order according to the ordered bursts (110).

2. The method according to claim 1, wherein analysing the bursts and grouping bursts together to form one or more new bursts using pre-defined grouping rules comprises:
Iteratively applying the pre-defined grouping rules to the plurality of bursts to group bursts together to form one or more new bursts (161-163).

3. The method according to claim 2, wherein iteratively applying the pre-defined grouping rules to the plurality of bursts to group bursts together to form one or more new bursts comprises:
Selecting one of the pre-defined grouping rules (161);
Selecting a burst that comprises more than one instruction (162); and
Recursively applying the selected rule to all sub-bursts within the selected burst to form a new burst by combining two or more sub-bursts together (163).

4. The method according to any of the preceding claims, wherein the pre-defined grouping rules identify a plurality of burst types and an order in which new bursts of the different burst types are formed by grouping together one or more bursts.

5. The method according to claim 4, wherein analysing the bursts and grouping bursts together to form one or more new bursts using pre-defined grouping rules comprises one or more of:
In response to detecting a discard instruction, forming a discard burst comprising the discard instruction (202);
In response to detecting a chain of arithmetic instructions, forming an arithmetic burst comprising the chain of arithmetic instructions (204); and
In response to detecting an instruction that is a producer of a predicate register, forming a predicate burst comprising the instruction that is the producer of the predicate register and any instructions that consume the predicate register (210).

6. The method according to claim 5, wherein discard bursts are formed before arithmetic bursts and arithmetic bursts are formed before predicate bursts.

7. The method according to claim 5 or 6, wherein analysing the bursts and grouping bursts together to form one or more new bursts using pre-defined grouping rules further comprises:
In response to detecting a sample instruction, forming a sample burst comprising the sample instruction (405); and
Grouping one or more instructions unrelated to the sample instruction with the sample burst to form a latency hiding burst (407).

8. The method according to claim 7, wherein analysing the bursts and grouping bursts together to form one or more new bursts using pre-defined grouping rules further comprises:
Grouping a producer instruction for the sample instruction into a sample and producer burst (406),
Wherein the latency hiding burst comprises the sample and producer burst and the one or more instructions unrelated to the sample instruction.

9. The method according to claim 7 or 8, wherein latency hiding bursts are formed after arithmetic bursts.

10. The method according to any of claims 5-9, wherein analysing the bursts and grouping bursts together to form one or more new bursts using pre-defined grouping rules further comprises:
In response to detecting a pixel output instruction, forming a pixel output burst comprising the pixel output instruction (708).

11. The method according to any of the preceding claims, wherein ordering the bursts using pre-defined ordering rules comprises:
selecting an inner most burst that comprises more than one instruction (181);
applying the pre-defined ordering rules to bursts within the selected burst (182); and
repeating the selecting and applying steps for a newly selected burst that comprises more than one instruction (183).

12. The method according to any of claims 5-11, wherein ordering the bursts using pre-defined ordering rules comprises one or more of:
Prioritizing any discard bursts (902);
Delaying bursts with stalls (914); and
Delaying pixel output bursts (912).

13. The method according to any of the preceding claims, further comprising:
Executing the modified version of the shader.

14. Computer readable code configured to cause the method of any of the preceding claims to be performed by a computer when the code is run on the computer.

15. A computer system (1100), comprising:
a processor (1102); and
memory (1106) arranged to store computer executable instructions that, when executed by the processor, cause the computer system to perform the method according to any of claims 1-15.
